(19) Europäisches Patentamt
European Patent Office
Office européen des brevets

(11) **EP 0 844 591 A1**

(12) **EUROPÄISCHE PATENTANMELDUNG**

(43) Veröffentlichungstag:
27.05.1998 Patentblatt 1998/22

(51) Int. Cl.$^6$: **G06T 9/00**

(21) Anmeldenummer: 97203524.0

(22) Anmeldetag: 12.11.1997

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: 20.11.1996 DE 19648017

(71) Anmelder:
• **Philips Patentverwaltung GmbH**
**22335 Hamburg (DE)**
Benannte Vertragsstaaten:
**DE**

• **Philips Electronics N.V.**
**5621 BA Eindhoven (NL)**
Benannte Vertragsstaaten:
**FR GB**

(72) Erfinder: **Ibenthal, Achim**
**Röntgenstrasse 24, 22335 Hamburg (DE)**

(74) Vertreter:
**von Laue, Hanns-Ulrich, Dipl.-Ing. et al**
**Philips Patentverwaltung GmbH,**
**Röntgenstrasse 24**
**22335 Hamburg (DE)**

(54) **Verfahren zur Bestimmung von Massstabsfaktoren für fraktale Bildkodierung**

(57) Es wird ein Verfahren zur Bestimmung von Maßstabsfaktoren für eine fraktale Bildkodierung vorgeschalgen, bei welcher zur Bildkodierung Bildbereiche oder mehrerer Bilder gesucht werden, die auf andere Bildbereiche unter Anwendung der Maßstabsfaktoren und entsprechender geometerischer Skalierung mit geringstmöglicher Abweichung abbildbar sind, wobei dieses Verfahren dadurch gekennzeichnet ist,

- jedes Bild in Analyseblöcke zerlegt wird, welche sich nicht überlappen und gemeinsam den vollständigen Bildinhalt enthalten,
- Analysegebiete erzeugt werden, welche jeweils einen Analyseblock enthalten, welcher kleiner ist als das Analysegebiet, wobei das übrige Analysegebiet jeweils mit einem vorgegebenen Signalwert ausgefüllt wird,
- Vergleichsgebiete erzeugt werden, die gleiche Größe wie die Analysegebiete aufweisen und die jeweils wenigstens Teile des Bildinhalts, vorzugsweise auch in transformierter Form, enthalten,
- die Bilddaten der Analysegebiete und der Vergleichsgebiete jeweils einer Fourier-Transformation unterzogen werden,
- von den Werten der beiden transformierten Signalen der Betrag gebildet und die Ortsskalierung der Signale in wenigstens einer Koordinatenrichtung örtlich logarithmisch umgerechnet wird,
- die wenigstens bezüglich einer Koordinatenrichtung örtlich logarithmisch umgerechneten Signale nochmals einer Fourier-Transformation unterzogen werden,
- von einem dieser beiden Signale ein konjugiert komplexes Signal gebildet und mit dem anderen Signal multipliziert wird,
- dieses Produkt auf eine vorgegebene Amplitude normiert wird,
- das normierte Signal einer inversen Fourier-Transformation unterzogen wird,
- für jedes Analysegebiet das Maximum dieses rücktransformierten Signals ermittelt wird, welches nach Delogarithmierung der logarithmierten Skalierung wenigstens einer der Koordinaten die optimalen Frequenz-Faktoren angibt,
- und die reziproken Werte der Frequenz-Faktoren gebildet werden, welche die gesuchten Maßstabsfaktoren darstellen, unter deren Anwendung ein Bereich aus dem Vergleichsgebiet mit der geringsten Abweichung auf den Analyseblock abbildbar ist.

Fig.4

EP 0 844 591 A1

## Beschreibung

Die Erfindung betrifft ein Verfahren zur Bestimmung von Maßstabsfaktoren für fraktale Bildkodierung, bei welcher zur Bildkodierung Bildbereiche eines oder mehrerer Bilder gesucht werden, die auf andere Bildbereiche unter Anwendung der Maßstabsfaktoren und entsprechender geometrischer Skalierung mit geringstmöglicher Abweichung abbildbar sind.

Bei der fraktalen Bildkodierung, wie sie beispielsweise aus "Fractal Image Coding and Magnification using Invariant Moments" von D. Götting, A. Ibenthal und R. Grigat, Nato Advance Study Institute on Fractal Image Encoding and Analysis, Trondheim, 1995, bekannt ist, wird eine Bildkodierung des Inhalts des Bildes dadurch vorgenommen, daß das Bild in Rangeblöcke zerlegt wird, die sich nicht überlappen und insgesamt den Bildinhalt vollständig wiedergeben. Ferner wird das Bild in Domainblöcke zerlegt, welche jeweils Teile des Bildinhalts, vorzugsweise auch in transformierter Form, enthalten. Für jeden Rangeblock wird derjenige Domainblock gesucht, der auf den jeweiligen Rangeblock mit der geringsten inhaltlichen Abweichung abbildbar ist. Dabei enthalten die Domainblöcke den Bildinhalt des ursprünglichen Bildes meist in verkleinerter Form. Üblich ist der Faktor 2. Dieser Faktor hat sich zwar zur Implementierung als günstig erwiesen, muß jedoch nicht immer der optimale Faktor sein.

Für eine optimale Kodierung ist es jedoch vorteilhaft, den optimalen Verkleinerungsfaktor der Bildinhaltes in den Domainblöcken zu finden. Verfahren nach dem Stande der Technik, die dies gestatten würden, sind nicht bekannt.

In dem Stande der Technik besteht die einzige Möglichkeit darin, verschiedene Verkleinerungsfaktoren für die Bildinhalte in den Domainblöcken auszuprobieren, indem für verschiedene Maßstabsfaktoren die komplette fraktale Bildkodierung für eine Bildvorgenommen wird und anschließend das Ergebnis auf seine Qualität hin überprüft wird. Es ist offensichtlich, daß dabei ein zu hoher Rechenaufwand entsteht, da nach dieser Vorgehensweise ein Bild mehrfach kodiert werden müßte, bis die optimale Kodierung feststeht.

Es ist Aufgabe der Erfindung, ein Verfahren zur Angabe der Maßstabsfaktoren anzugeben, das vor Vornahme der fraktalen Bildkodierung die günstigsten Maßstabsfaktoren liefert.

Diese Aufgabe der Erfindung ist dadurch gelöst, daß

- jedes Bild in Analyseblöcke zerlegt wird, welche sich nicht überlappen und gemeinsam den vollständigen Bildinhalt enthalten,
- Analysegebiete erzeugt werden, welche jeweils einen Analyseblock enthalten, welcher kleiner ist als das Analysegebiet, wobei das übrige Analysegebiet jeweils mit einem vorgegebenen Signalwert ausgefüllt wird,

- Vergleichsgebiete erzeugt werden, die gleiche Größe wie die Analysegebiete aufweisen und die jeweils wenigstens Teile des Bildinhalts, vorzugsweise auch in transformierter Form, enthalten,
- die Bilddaten der Analysegebiete und der Vergleichsgebiete jeweils einer Fourier-Transformation unterzogen werden,
- von den Werten der beiden transformierten Signalen der Betrag gebildet und die Ortsskalierung der Signale in wenigstens einer Koordinatenrichtung örtlich logarithmisch umgerechnet wird,
- die wenigstens bezüglich einer Koordinatenrichtung örtlich logarithmisch umgerechneten Signale nochmals einer Fourier-Transformation unterzogen werden,
- von einem dieser beiden Signale ein konjugiert komplexes Signal gebildet und mit dem anderen Signal multipliziert wird,
- dieses Produkt auf eine vorgegebene Amplitude normiert wird,
- das normierte Signal einer inversen Fourier-Transformation unterzogen wird,
- für jedes Analysegebiet das Maximum dieses rücktransformierten Signals ermittelt wird, welches nach Delogarithmierung der logarithmierten Skalierung wenigstens einer der Koordinaten die optimalen Frequenz-Faktoren angibt,
- und die reziproken Werte der Frequenz-Faktoren gebildet werden, welche die gesuchten Maßstabsfaktoren darstellen, unter deren Anwendung ein Bereich aus dem Vergleichsgebiet mit der geringsten Abweichung auf den Analyseblock abbildbar ist.

Zur Ermittlung der optimalen Maßstabsfaktoren wird jedes Bild in Analyseblöcke zerlegt, welche zusammen den gesamten Bildinhalt wiedergeben und welche sich nicht überlappen. Diese Analyseblöcke werden in Analysegebiete eingebettet. Jedes Analysegebiet enthält jeweils einen Analyseblock. Jedes Analysegebiet enthält außer dem Analyseblock ein Gebiet, das mit einem festen, vorgegebenen Signalwert ausgefüllt wird; diese Gebiete enthalten also keine eigentliche Bildinformation.

Ferner werden Vergleichsgebiete generiert, die jeweils die gleiche Größe wie die Analysegebiete haben. Diese Vergleichsgebiete enthalten jeweils wenigstens Teile des Bildinhalts, vorzugsweise auch in transformierter Form.

Sowohl die Bilddaten der Analysegebiete wie auch die der Vergleichsgebiete werden jeweils einer Fourier-Transformation unterzogen. Damit werden die Daten vom Ortsbereich in den Frequenzbereich umgesetzt. Die ortsdiskreten Amplituden der Signale werden einer Betragsbildung unterzogen. Diese Skalierung wenigstens einer der Koordinaten wird lagarithmisch umgerechnet. Darunter wird verstanden, daß die zunächst in äquidistantem Abstand in einer Koordinatenrichtung vorliegenden Abtastwerte in wenigstens einer Koordinatenrichtung auf ein logarithmsich eingeteiltes Raster umgesetzt werden. Dieses Raster wird anschließend äquidistant abgetastet, so daß im Endeffekt in der Skalierung dieser Koordinate eine logarithmische Verzerrung entsteht.

Die wenigstens bezüglich einer Koordinate bzw. Koordinatenrichtung logarithmierten Signale werden einer weiteren Fourier-Transformation unterzogen. Die so nochmals transformierten Signale werden multipliziert, wobei eines vorher in sein konjugiert komplexes Signal umgewandelt wird.

Das Produkt wird auf eine vorgegebene Amplitude normiert, so daß in dem Signal keine Amplitudeninformation mehr enthalten ist. Die Information steckt nunmehr ausschließlich in einer Phasenmodulation des Signals. Das so normierte Signal wird einer inversen Fourier-Transformation unterzogen und das Maximum des so rücktransformierten Signals ermittelt. Diese geschieht einzeln für jeden Analyseblock bzw. für jedes Analysegebiet. Anschließend werden die Koordinatenrichtungen, soweit sie zuvor logarithmisch umgerechnet wurden, wieder delogarithmiert. Das dann erzeugte Signal indiziert nach Bildung der reziproken Werte für jeden Bereich aus dem Vergleichsgebiet diejenigen Maßstabsfaktoren, unter deren Anwendung der jeweilige Bereich des Vergleichsgebiets mit der geringsten Abweichung auf den zugeordneten Analyseblock abbildbar ist.

Damit ist für jeden Analyseblock bekannt, welche Maßstabsfaktoren für alle Bereiche aus den Domainblöcken jeweils anwendbar sind, damit diese mit möglichst geringer Abweichung auf den Analyseblock abbildbar sind. Diese Maßstabsfaktoren können individuell für jeden Analyseblock eingesetzt werden; es besteht jedoch auch die Möglichkeit, gemeinsame Maßstabsfaktoren für alle Blöcke eines Bildes vorzusehen.

Die Erfindung macht sich zunutze, daß sich Verschiebungen im Frequenzbereich durch eine Phasendrehung ohne Einfluß auf die Amplitude äußern. Durch die Betragsbildung wird die Phase eliminiert. Übrig bleibt die Amplitude, die somit verschiebungsinvariant ist. Die logarithmische Umrechnung in wenigstens einer Koordinate und damit eintretende Maßstabsverzerrung wiederum führt dazu, daß sich Skalierungsunterschiede in Verschiebungen umwandeln. Da gilt

$$\log (s \cdot x) = \log (s) + \log (x),$$

wobei x die örtliche Koordinate und s Dehnung oder Stauchung derselben darstellen, kann log (s) als eine Verschiebung gegenüber der Position log (x) aufgefaßt werden. Die Verschiebung log (s) wird dann durch das erfindungsgemäße Verfahren ermittelt.

Damit kann in einem Verfahren zur fraktalen Bildkodierung, das nachgeschaltet ist, für Rangeblöcke, die beispielsweise identische Form, wie die Analyseblöcke haben können, ermittelt werden, welche Maßstabsfaktoren für die Gebiete aus dem Bildinhalt jeweils optimal anwendbar sind. Die eigentliche Auswahl der Domainblöcke und damit der Kodierung des Bildes bleibt diesem nachgeschalteten Verfahren vorbehalten. Das erfindungsgemäße Verfahren liefert jedoch im vorhinein die optimalen Maßstabsfaktoren, unter deren Anwendung Gebiete aus dem Bildinhalt, die bei der fraktalen Bildkodierung Domaingebiete oder Domainblöcke darstellen, auf die jeweiligen Rangeblöcke abbildbar sind.

Damit schafft das erfindungsgemäße Verfahren die Voraussetzungen für eine nachfolgende fraktale Bildkodierung, bei der die optimalen Maßstabsfaktoren eingesetzt werden. Bei der fraktalen Bildkodierung an sich sind nur noch jeweils die optimalen Domainblöcke oder Domaingebiete für jeden Rangeblock zu finden.

Gemäß einer Ausgestaltung der Erfindung ist vorgesehen, daß die Position der Bildpunkte in den Analyseblöcken und den Vergleichsblöcken mittels kartesischer Koordinaten x und y angegeben werden, daß nach der Betragsbildung die Skalierungen beider Koordinaten logarithmiert werden, daß nach der inversen Fourier-Transformation beide Koordinaten delogarithmiert werden und daß mittels des Verfahrens Maßstabsfaktoren $x_v$ und $y_v$ ermittelt werden, welche die optimale Maßstabsanpassung in x- bzw. y-Richtung angeben, unter deren Anwendung ein Bereich aus dem Vergleichsgebiet mit der geringsten Abweichung auf den Analyseblock abbildbar ist.

Eine Einteilung der Position der Bildpunkte innerhalb der Analyseblöcke und der Vergleichsblöcke mittels kartesischer Koordinaten x und y ist üblich. Werden diese Koordinaten gewählt, so sind nach der Betragsbildung beide Koordinaten zu logarithmieren und nach der inversen Fourier-Transformation wieder zu delogarithmieren. Das erfindungsgemäße Verfahren liefert dann nach der Maximumbildung getrennte Maßstabsfaktoren $x_v$ und $y_v$, welche jeweils die optimale Maßstabsanpassung in x- bzw. y-Richtung angeben. Damit gestattet das erfindungsgemäße Verfahren bei Anwendung der kartesischen Koordinaten getrennt ermittelte, optimale Maßstabsfaktoren für x- und y-Richtung.

Für Anwendung von Polarkoordinaten für die Angabe der Position der Bildpunkte in den Analyseblöcken und den Vergleichsblöcken ist gemäß einer weiteren Ausgestaltung der Erfindung vorgesehen, daß die Position der Bildpunkte in den Analyseblöcken und den Vergleichsblöcken mittels Polarkoordinaten Radius r und Winkel $\varphi$ angegeben werden, daß nach der Betragsbildung die r-Koordinate logarithmiert wird, daß nach der inversen Fourier-Transformation die r-Koordinate delogarithmiert wird und daß mittels des Verfahrens Maßstabsfaktoren $r_v$ und $\varphi_v$ ermittelt werden, welche die optimale Maßstabsanpassung bezüglich Radius r und Winkel $\varphi$ angeben, unter deren Anwendung ein Bereich aus dem Vergleichsgebiet mit der geringsten Abweichung auf den Analyseblock abbildbar ist.

Bei Anwendung von Polarkoordinaten, bei denen r

den Radius und φ den Winkel angeben, wird nur die r-Koordinate logarithmiert. Damit wirde eine Invarianz bezüglich der Größe eine Objektes erzielt. Durch Umrechnung der Orte der Beträge der Spektralinformation in ein Polarkoordinatensystem werden Drehungen zu Verschiebungen. Nach Delogarithmierung der r-Werte und Durchführung des Verfahrens liefert dieses denjenigen Radius r und denjenigen Winkel φ für jedes Rangegebiet, unter deren Anwendung ein Gebiet des Bildes (Vergleichsgebiet) mit der geringsten Abweichung bezüglich des Bildinhalts auf den Analyseblock abbildbar ist.

Bei Anwendung dieses Polarkoordinatensystems in dem erfindungsgemäßen Verfahren kann also sowohl eine entsprechende Anpassung der Größe des Bildinhalts wie auch desjenigen Winkels, unter dem dieser im Bild angeordnet ist, vorgenommen werden.

Im Gegensatz zur Anwendung der kartesischen Koordinaten kann also auch eine Drehung ermittelt werden, jedoch ist dann keine getrennte Ermittlung der Maßstabsfaktoren für x- und y-Richtung mehr möglich.

Wie nach weiteren Ausgestaltungen der Erfindung vorgesehen ist, enthalten die Vergleichsgebiete vorteilhafterweise den gesamten Bildinhalt eines Bildes sowie dessen Bildhalt in transformierter Form. Damit können in einem Suchvorgang des Verfahrens für alle Gebiete des Bildes in ursprünglicher wie auch in transformierter Form für den jeweiligen Analyseblock die optimalen Maßstabsfaktoren ermittelt werden.

Wie oben bereits erläutert wurde, liefert das Verfahren die optimalen Maßstabsfaktoren, die für eine anschließende fraktale Bildkodierung eingesetzt werden können. Die Art der nachfolgenden fraktalen Bildkodierung ist grundsätzlich beliebig.

So können, wie nach einer weiteren Ausgestaltung der Erfindung vorgesehen ist, die ermittelten Maßstabsfaktoren in einem Verfahren zur fraktalen Bildkodierung eingesetzt werden, bei welchem

-   jedes Bild in Rangeblöcke zerlegt wird, welche sich nicht überlappen und gemeinsam den vollständigen Bildinhalt enthalten,
-   Domainblöcke generiert werden, welche gleiche Größe wie die Rangeblöcke aufweisen, welche nach Maßgabe der Maßstabsfaktoren geometrisch skalierte Teile des Bildinhalts enthalten,
-   und bei welchem für jeden Rangeblock derjenige Domainblock gesucht wird, welcher mit der geringsten Abweichung bezüglich des Bildinhalts auf den Rangeblock abbildbar ist.

Bei diesem bekannten Verfahren wird das Bild bei der fraktalen Bildkodierung in Rangeblöcke und in Domainblöcke zerlegt, wobei die Domainblöcke fest Blockgröße und feste Position innerhalb eines Blockrasters im Bild haben. Bei diesem Verfahren wird für jeden Rangeblock derjenige Domainblock gesucht, welcher mit der geringsten Abweichung bezüglich des Bildinhalts auf den Rangeblock abbildbar ist. Das erfindungsgemäße Verfahren liefert hierfür im vorhinein die optimalen Maßstabsfaktoren. Damit wird eine Verbesserung des Kodierungsergebnisses erzielt.

Das erfindungsgemäße Verfahren ist, wie gemäß einer weiteren Ausgestaltung der Erfindung vorgesehen ist, auch für ein anderes Verfahren einsetzbar, bei dem die ermittelten Maßstabsfaktoren in einem Verfahren zur fraktalen Bildkodierung eingesetzt werden, bei welchem

-   jedes Bild in Rangeblöcke zerlegt wird, welche sich nicht überlappen und gemeinsam den vollständigen Bildinhalt enthalten,
-   Rangegebiete erzeugt werden, welche jeweils einen Rangeblock enthalten, welcher kleiner ist als das Rangegebiet, wobei das übrige Rangegebiet jeweils mit einem vorgegebenen Signalwert ausgefüllt wird,
-   Domaingebiete erzeugt werden, die die gleiche Größe wie die Rangegebiete aufweisen und die jeweils wenigstens Teile des Bildinhalts, vorzugsweise auch in transformierter Form, enthalten, welche nach Maßgabe der Maßstabsfaktoren geometrisch skaliert sind,
-   die Bilddaten der Rangegebiete und der Domaingebiete jeweils einer Fourier-Transformation unterzogen werden,
-   von einem der beiden transformierten Signale ein konjugiert komplexes Signal gebildet und mit dem anderen Signal multipliziert wird,
-   dieses Produkt auf eine vorgegebene Amplitude normiert wird,
-   das normierte Signal einer inversen Fourier-Transformation unterzogen wird,
-   für jedes Rangegebiet das Maximum dieses rücktransformierten Signals ermittelt wird, welches innerhalb eines Domaingebietes die Position desjenigen Domainblocks angibt, dessen Bildinhalt den Bildinhalt des Rangegebietes am besten annähert.

Bei diesem Verfahren werden die Rangeblöcke in Rangegebiete eingebettet. Diese Rangegebiete sind größer als die Rangeblöcke. Es werden ferner Domaingebiete erzeugt, die gleiche Größe wie die Rangegebiete haben und die wenigstens Teile des Bildinhalts, vorzugsweise auch in transformierter Form, enthalten. Diese Gebiete sind nach Maßgabe der durch das erfindungsgemäße Verfahren gelieferten Maßstabsfaktoren geometrisch skaliert.

Bei diesem Verfahren zur fraktalen Bildkodierung werden die Bilddaten der Rangegebiete und der Domaingebiete einer Fourier-Transformation unterzogen, eines der transformierten Signale wird ein konjugiert komplexes Signal umgewandelt, dieses wird mit dem nicht umgewandelten Signal multipliziert und das Produkt auf eine vorgegebene Amplitude normiert. Das normierte Signal wird wiederum einer inversen Fourier-Transformation unterzogen, also vom Frequenzbereich wieder in den Ortsbereich umgesetzt.

Durch Auswertung dieses Signales kann für jedes Rangegebiet dasjenige Gebiet innerhalb eines Domaingebietes ermittelt werden, das bezüglich seines Bildinhaltes mit der geringsten Abweichung auf das Rangegebiet bzw. den Rangeblock abbildbar ist.

Dieses Verfahren zur fraktalen Bildkodierung hat vor allem die Vorteile, daß es mit geringerem Rechenaufwand arbeitet als das zuvor genannte Verfahren und daß die Domainblöcke innerhalb der Domaingebiete nicht einer festen Blockeinteilung unterliegen. Vielmehr wird innerhalb der Domaingebiete dasjenige Gebiet gefunden, das optimal auf den jeweiligen Rangeblock abbildbar ist. Die Einteilung dieser gefundenen Bereiche, die auch hier als Domaingebiete bezeichnet werden können, ist im Prinzip frei, d.h. jeder Domainblock kann eine beliebige Anordnung und Größe innerhalb des Bildes haben.

Nachfolgend wird ein Ausführungsbeispiel der Erfindung näher erläutert. Es zeigen:

Fig. 1 ein Bild, für das die optimalen Maßstabsfaktoren zu ermitteln sind und in das ein Beispiel für einen Analyseblock eingetragen ist,

Fig. 2 ein Analysegebiet, in das der Analyseblock der Darstellung gemäß Fig. 1 aufgenommen wurde,

Fig. 3 ein Vergleichsgebiet, das den Bildinhalt des Bildes gemäß Fig. 1 in ursprünglicher, aber auch in transformierter Form enthält, und

Fig. 4 ein Blockschaltbild einer Anordnung zur Durchführung des erfindungsgemäßen Verfahrens.

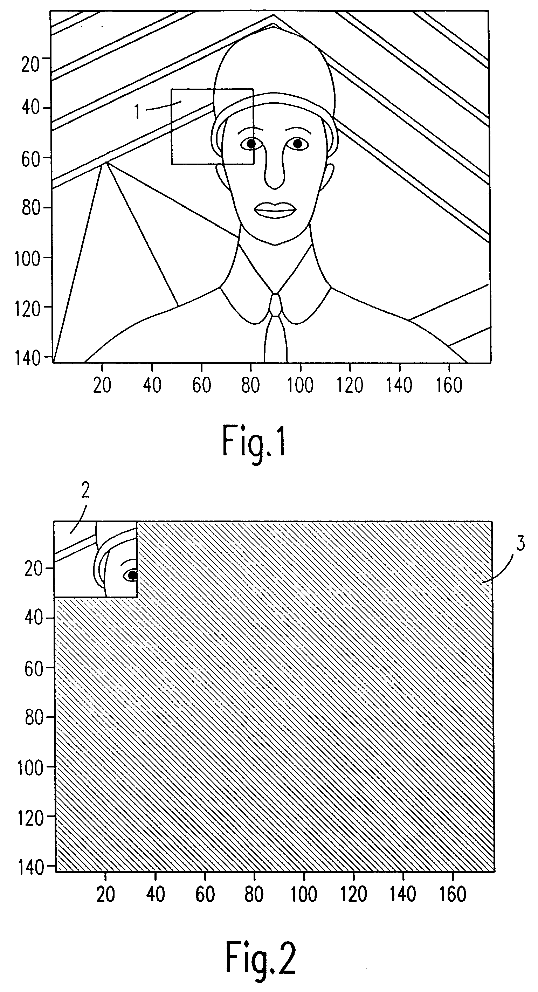

In Fig. 1 ist ein Bild dargestellt, das einer fraktalen Bildkodierung zu unterziehen ist. Bei der fraktalen Bildkodierung wird das Bild in Rangeblöcke eingeteilt, die den Bildinhalt des Bildes vollständig erfassen und sich nicht überlappen. Es werden ferner Domaingebiete generiert, die jeweils Teile des Bildinhaltes, vorzugsweise auch in transformierter Form enthalten. Es können dabei die oben erläuterten Verfahren zur fraktalen Bildkodierung eingesetzt werden, die entweder mit fester Blockeinteilung oder mit variabler Blockeinteilung arbeiten.

In jedem Falle wird die Qualität des Ergebnisses der fraktalen Bildkodierung dadurch entscheidend beeinflußt, daß für die meist verkleinerten Gebiete des Bildinhaltes innerhalb der Domainblöcke die optimalen Maßstabsfaktoren, meist Verkleinerungsfaktoren, gefunden werden.

Diese Maßstabsfaktoren können gemäß des nachfolgend erläuterten erfindungsgemäßen Verfahrens entweder für jeden Rangeblock einzeln oder für ein Bild einheitlich ermittelt werden.

Nach dem erfindungsgemäßen Verfahren werden Analyseblöcke generiert. Diese Analyseblöcke, die sich mit den Rangeblöcken des nachfolgend eingesetzten Verfahrens zur fraktalen Bildkodierung decken können, geben jeweils Teile des Bildinhaltes wieder, überlappen sich nicht und decken insgesamt das vollständige Bild ab.

Die Schemazeichnung gemäß Fig. 1 deutet einen Bildinhalt an, der einen Arbeiter mit einem Helm vor einem Gebäude zeigt. In die Darstellung gemäß Fig. 1 ist exemplarisch ein Analyseblock 1 eingetragen. Der Analyseblock weist in horizontaler und in vertikaler Richtung je 30 Bildpunkte auf. Er gibt damit einen Teil des Bildes wieder, welches insgesamt in horizontaler Richtung 176 und in vertikaler Richtung 144 Bildpunkte aufweist. Entsprechend dem in Fig. 1 eingetragenen Analyseblock werden weitere Blöcke generiert, die insgesamt den Bildinhalt vollständig wiedergeben.

Die Darstellung gemäß Fig. 2 zeigt, wie ein Analyseblock in ein Analysegebiet eingebettet wird. In der Darstellung gemäß Fig. 2 ist ein Analyseblock 2 eingetragen, der dem Analyseblock 1 der Fig. 1 entspricht. Dieser Analyseblock ist umgeben von einer Fläche 3 mit festem Signalwert. Dieser Signalwert variiert innerhalb des Analysegebietes nicht und ist bezüglich seiner Höhe vorgebbar.

Zur Durchführung des erfindungsgemäßen Verfahrens sind ferner Vergleichsgebiete zu erzeugen. Diese Vergleichsgebiete geben den Bildinhalt vorzugsweise vollständig wieder. Sie können darüber hinaus auch den Bildinhalt in transformierter Form enthalten.

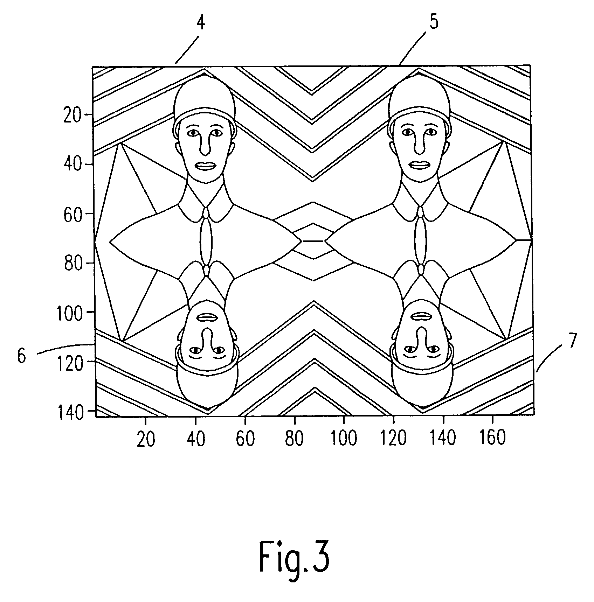

Fig. 3 zeigt ein solches Beispiel für ein Vergleichsgebiet. Das Vergleichsgebiet gemäß Fig. 3 enthält ein Teilgebiet 4, das den Bildinhalt des ursprünglichen Bildes gemäß Fig. 1 vollständig wiedergibt. Das Gebiet 5 zeigt die Spiegelung des Gebietes 4 in horizontaler Richtung; ein Gebiet 6 dessen Spiegelung in vertikaler Richtung. Das Teilgebiet 7 zeigt die Drehung des ursprünglichen Bildinhaltes des Teiles 4 um 180°.

Die in den Analyse- und Vergleichsgebieten enthaltenen Bildinhalte weisen Ähnlichkeiten auf. Diese Ähnlichkeiten können an unterschiedlichen Positionen in beiden Gebieten auftreten, darüber hinaus aber noch unter unterschieldichen geometrischen Maßstäben, d.h. in vergrößterter oder verkleinerter Form, sowie unter unterschiedliichen Drehwinkeln.

Da das Verfahren die optimalen Maßstabsfaktoren bzw. Drehwinkel unabhängig von der Verschiebung bestimmen soll, muß also eine Darstellung der Bildinhalte gefunden werden, die nicht von der Position des Bildinhaltes selbst abhängig ist, also verschiebungsinvariant ist. Dies wird in dem erfindungsgemäßen Verfahren dadurch erreicht, daß Analyse- und Vergleichsgebiete einer Fourier-Transformation unterzogen werden. Verschiebungen äußern sich im Frequenzbereich durch eine Phasendrehung ohne Einfluß auf die Amplitude. Durch die Betragsbildung wird die Phase eliminiert, und was bleibt, ist die Amplitude, die somit verschiebungsinvariant ist. Die weitere Bestimmung von Skalierungs- bzw. Drehfaktoren hängt also nicht mehr von Verschiebungen innerhalb der originalen Bildbereiche ab.

Eine anschließende logarithmische Maßstabsverzerrung führt dazu, daß sich Skalierungsunterschiede in Verschiebungen umwandeln nach dem Gesetz für den Logarithmus $\log (s_x \cdot x) = \log (s_x) + \log (x)$, wobei x die horizontale örtliche Koordinate des fouriertransformierten Signales und $s_x$ die Dehnung oder Stauchung desselben darstellen. Nun kann $\log (s_x)$ als eine Verschiebung gegenüber der Position $\log (x)$ aufgefaßt werden. Dabei können im Falle einer Darstellung im kartesischen Koordinatensystem beide Koordinaten x und y logarithmiert werden. Die Verschiebungen $\log (s_x)$ bzw. $\log (s_y)$ werden dann erfindungsgemäß durch eine Phasenkorrelation ermittelt, die ein Maximum an der logarithmierten Stelle der optimalen Skalierungsfaktoren liefert. Zur Ermittlung der von $s_x$ und $s_y$ ist dann lediglich noch eine Delogarithmierung durchzuführen.

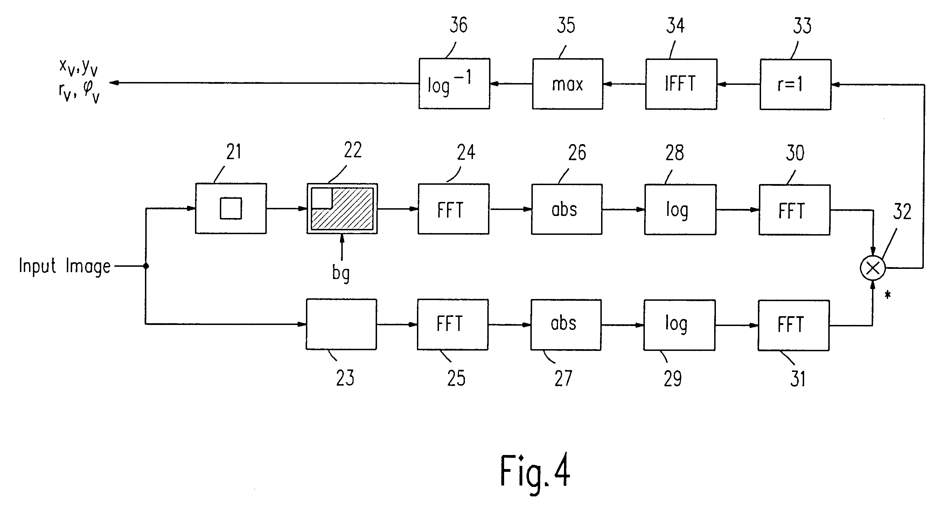

Dies wird nachfolgend anhand eines in Fig. 4 dargestellten Blockschaltbildes einer Anordnung zur Durchführung des erfindungsgemäßen Verfahrens näher erläutert.

Der Anordnung gemäß Fig. 4 wird ein Eingangsbild mit dessen Bilddaten zugeführt. Diese sind in der Figur mit "Input Image" gekennzeichnet. Die Daten gelangen auf Mittel 21 zur Analyseblock-Bildung, denen Mittel 22 zur Analysegebiet-Bildung nachgeschaltet sind. Die Mittel 22 liefern ausgangsseitig beispielsweise ein Analysegebiet der Darstellung gemäß Fig. 2.

Die Eingangsdaten werden ferner Mitteln 23 zur Generierung der Vergleichsgebiete zugeführt, die beispielsweise ein Vergleichsgebiet der Darstellung gemäß Fig. 3 generieren. Dabei erzeugen die Mittel 23 vorzugsweise Transformationen des ihnen zugeführten Bildes.

Den Mitteln 22 und 23 sind jeweils Mittel 24 bzw. 25 zur Fourier-Transformation nachgeschaltet, die die ihnen zugeführten Signale vom Ortsbereich in den Frequenzbereich umsetzen. Den Mitteln 24 und 25 sind Betragsbildner 26 bzw. 27 nachgeschaltet, deren Ausgangssignale auf Mittel zur logarithmischen Koordinatentransformation 28 bzw. 29 gelangen, denen Mittel 30 bzw. 31 zur Fourier-Transformation nachgeschaltet sind.

Bei Wahl kartesischer Koordinaten zur Angabe der Bildpunkte innerhalb der Analysegebiete und der Vergleichsgebiete werden mittels der Logarithmierer 28 bzw. 29 sowohl die x- wie auch die y-Koordinaten logarithmiert.

Bei Wahl eines Polarkoordinatensystems zur Angabe der Position der Bilddaten wird in den Logarithmierern 28 und 29 nur die Radius-Koordinate r logarithmiert.

Den Mitteln 30 bzw. 31, von deren Ausgangssignalen eines in sein konjugiert komplexes Signal umgewandelt wird, ist ein Multiplizierer 32 nachgeschaltet, der das umgewandelte Signal und das jeweils andere, nicht umgewandelte Signal miteinander multipliziert.

Dem Multiplizierer 32 ist ein Normierer 33 nachgeschaltet, der die Amplitude des Signals auf einen Wert gleich 1 normiert. Das normierte Signal wird mittels Mitteln 34 zur inversen Fourier-Transformation rücktransformiert, denen Mittel 35 zur Maximum-Detektion nachgeschaltet sind. Die Koordinaten des gefundenen Maximums werden mittels Mitteln 36 delogarithmiert. Dabei werden im Falle der kartesischen Koordinaten beide Koordinatenrichtungen x und y delogarithmiert, im Falle der Polarkoordinaten nur die Koordinate r. Es werden die reziproken Werte gebildet, die die gesuchten Maßstabsfaktoren darstellen.

Die Anordnung gemäß Fig. 4 liefert ausgangsseitig das Ausgangssignal der Mittel 36, die für den mittels der Mittel 21 generierten Analyseblock bzw. mittels der Mittel 22 generierten Analysebereich diejenigen Maßstabsfaktoren $x_v$, $y_v$ oder $r_v$, $\varphi_v$, unter deren Anwendung ein Bereich des mittels der Mittel 23 generierten Vergleichsgebietes unter minimaler Abweichung des Bildinhaltes auf den Analyseblock bzw. auf das Analysegebiet abbildbar ist.

Zur Vornahme einer fraktalen Bildkodierung kann der Schaltungsanordnung gemäß Fig. 4 eine weitere nachgeschaltet sein, die die eigentliche fraktale Bildkodierung vornimmt und dabei die Maßstabsfaktoren einsetzt, die die Anordnung gemäß Fig. 4 liefert.

Damit ist für die eigentliche fraktale Bildkodierung im vorhinein bekannt, welche optimalen Maßstabsfaktoren einzusetzen sind. Damit wird das Ergebnis der fraktalen Bildkodierung gegenüber dem Stand der Technik optimiert.

**Patentansprüche**

1. Verfahren zur Bestimmung von Maßstabsfaktoren für fraktale Bildkodierung, bei welcher zur Bildkodierung Bildbereiche eines oder mehrerer Bilder gesucht werden, die auf andere Bildbereiche unter Anwendung der Maßstabsfaktoren und entsprechender geometrischer Skalierung mit geringstmöglicher Abweichung abbildbar sind, dadurch gekennzeichnet, daß

- jedes Bild in Analyseblöcke zerlegt wird, welche sich nicht überlappen und gemeinsam den vollständigen Bildinhalt enthalten,
- Analysegebiete erzeugt werden, welche jeweils einen Analyseblock enthalten, welcher kleiner ist als das Analysegebiet, wobei das übrige Analysegebiet jeweils mit einem vorgegebenen Signalwert ausgefüllt wird,
- Vergleichsgebiete erzeugt werden, die gleiche Größe wie die Analysegebiete aufweisen und die jeweils wenigstens Teile des Bildinhalts, vorzugsweise auch in transformierter Form, enthalten,

- die Bilddaten der Analysegebiete und der Vergleichsgebiete jeweils einer Fourier-Transformation unterzogen werden,
- von den Werten der beiden transformierten Signalen der Betrag gebildet und die Ortsskalierung der Signale in wenigstens einer Koordinatenrichtung örtlich logarithmisch umgerechnet wird,
- die wenigstens bezüglich einer Koordinatenrichtung örtlich logarithmisch umgerechneten Signale nochmals einer Fourier-Transformation unterzogen werden,
- von einem dieser beiden Signale ein konjugiert komplexes Signal gebildet und mit dem anderen Signal multipliziert wird,
- dieses Produkt auf eine vorgegebene Amplitude normiert wird,
- das normierte Signal einer inversen Fourier-Transformation unterzogen wird,
- für jedes Analysegebiet das Maximum dieses rücktransformierten Signals ermittelt wird, welches nach Delogarithmierung der logarithmierten Skalierung wenigstens einer der Koordinaten die optimalen Frequenz-Faktoren angibt,
- und die reziproken Werte der Frequenz-Faktoren gebildet werden, welche die gesuchten Maßstabsfaktoren darstellen, unter deren Anwendung ein Bereich aus dem Vergleichsgebiet mit der geringsten Abweichung auf den Analyseblock abbildbar ist.

2. Verfahren nach Anspruch 1, dadurch gekennzeichnet, daß die Position der Bildpunkte in den Analyseblöcken und den Vergleichsblöcken mittels kartesischer Koordinaten x und y angegeben werden, daß nach der Betragsbildung die Skalierungen beider Koordinaten logarithmiert werden, daß nach der inversen Fourier-Transformation beide Koordinaten delogarithmiert werden und daß mittels des Verfahrens Maßstabsfaktoren $x_v$ und $y_v$ ermittelt werden, welche die optimale Maßstabsanpassung in x- bzw. y-Richtung angeben, unter deren Anwendung ein Bereich aus dem Vergleichsgebiet mit der geringsten Abweichung auf den Analyseblock abbildbar ist.

3. Verfahren nach Anspruch 1, dadurch gekennzeichnet, daß die Position der Bildpunkte in den Analyseblöcken und den Vergleichsblöcken mittels Polarkoordinaten Radius r und Winkel $\varphi$ angegeben werden, daß nach der Betragsbildung die r-Koordinate logarithmiert wird, daß nach der inversen Fourier-Transformation die r-Koordinate delogarithmiert wird und daß mittels des Verfahrens Maßstabsfaktoren $r_v$ und $\varphi_v$ ermittelt werden, welche die optimale Maßstabsanpassung bezüglich Radius r und Winkel $\varphi$ angeben, unter deren

Anwendung ein Bereich aus dem Vergleichsgebiet mit der geringsten Abweichung auf den Analyseblock abbildbar ist.

4. Verfahren nach einem der Ansprüche 1 bis 3, dadurch gekennzeichnet, daß die Vergleichsgebiete den gesamten Bildinhalt eines Bildes enthalten.

5. Verfahren nach einem der Ansprüche 1 bis 3, dadurch gekennzeichnet, daß die Vergleichsgebiete den gesamten Bildinhalt eines Bildes und dessen Bildinhalt in transformierter Form, vorzugsweise in um 90 oder 270 Grad gedrehter und/oder gespiegelter Form, enthalten.

6. Verfahren nach einem der Ansprüche 1 bis 5, dadurch gekennzeichnet, daß die ermittelten Maßstabsfaktoren in einem Verfahren zur fraktalen Bildkodierung eingesetzt werden, bei welchem

- jedes Bild in Rangeblöcke zerlegt wird, welche sich nicht überlappen und gemeinsam den vollständigen Bildinhalt enthalten,
- Domainblöcke generiert werden, welche gleiche Größe wie die Rangeblöcke aufweisen, welche nach Maßgabe der Maßstabsfaktoren geometrisch skalierte Teile des Bildinhalts enthalten,
- und bei welchem für jeden Rangeblock derjenige Domainblock gesucht wird, welcher mit der geringsten Abweichung bezüglich des Bildinhalts auf den Rangeblock abbildbar ist.

7. Verfahren nach einem der Ansprüche 1 bis 5, dadurch gekennzeichnet, daß die ermittelten Maßstabsfaktoren in einem Verfahren zur fraktalen Bildkodierung eingesetzt werden, bei welchem

- jedes Bild in Rangeblöcke zerlegt wird, welche sich nicht überlappen und gemeinsam den vollständigen Bildinhalt enthalten,
- Rangegebiete erzeugt werden, welche jeweils einen Rangeblock enthalten, welcher kleiner ist als das Rangegebiet, wobei das übrige Rangegebiet jeweils mit einem vorgegebenen Signalwert ausgefüllt wird,
- Domaingebiete erzeugt werden, die die gleiche Größe wie die Rangegebiete aufweisen und die jeweils wenigstens Teile des Bildinhalts, vorzugsweise auch in transformierter Form, enthalten, welche nach Maßgabe der Maßstabsfaktoren geometrisch skaliert sind,
- die Bilddaten der Rangegebiete und der Domaingebiete jeweils einer Fourier-Transformation unterzogen werden,
- von einem der beiden transformierten Signale ein konjugiert komplexes Signal gebildet und mit dem anderen Signal multipliziert wird,

- dieses Produkt auf eine vorgegebene Amplitude normiert wird,
- das normierte Signal einer inversen Fourier-Transformation unterzogen wird,
- für jedes Rangegebiet das Maximum dieses rücktransformierten Signals ermittelt wird, welches innerhalb eines Domaingebietes die Position desjenigen Domainblocks angibt, dessen Bildinhalt den Bildinhalt des Rangegebietes am besten annähert.

8. Enkoder zur Durchführung des Verfahrens nach einem der Ansprüche 1 bis 5, dadurch gekennzeichnet, daß Mittel (21) zur Analyseblock-Bildung vorgesehen sind, denen das Bildsignal zugeführt wird und denen Mittel (22) zur Analysegebiet-Bildung nachgeschaltet sind, daß Mittel (23) zur Generierung der Vergleichsgebiete vorgesehen sind, denen das Bildsignal zugeführt wird, daß den Mitteln (21,22) zur Analyse- bzw. Vergleichsblock-Bildung Mittel (24;25) zur Fourier-Transformation nachgeschaltet sind, deren Ausgangssignale Betragsbildnern (26;27) zugeführt sind, denen Mittel (28; 29) zur logarithmischen Koordinatentransformation nachgeschaltet sind, welche wenigsten eine Koordinate der ihnen zugeführten Signale logarithmieren, daß den Logarithmierern (28;29) Mittel (30;31) zur Fourier-Transformation nachgeschaltet sind, von deren Ausgangssignalen eines in das konjugiert komplexe Signal umgewandelt wird, welches mit dem nicht umgewandelten Signal der anderen Mittel zur Fourier-Transformation mittels eines Multiplizierers (32) multipliziert wird, dessen Ausgangssignal Mitteln (33) zur Normierung der Amplitude zugeführt wird, denen Mittel (34) zur Durchführung der inversen Fourier-Transformation nachgeschaltet sind, in deren Ausgangssignal mittels eines Maximum-Detektors (35) die maximale Amplitude festgestellt wird, deren zuvor logarithmierte Koordinaten mittels eines Delogarithmierers (36) delogarithmiert wird, dessen Ausgangssignal nach Bildung des reziproken Wertes die optimalen Maßstabsfaktoren für die Vergleichsgebiete in Bezug auf ein Analysegebiet angibt.

Fig.1

Fig.2

Fig.3

Fig.4

EP 0 844 591 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | IBENTHAL A ET AL: "Fourier domain measurement of geometrical scaling and rotation factors for fractal image coding and motion compensated prediction" PICTURE CODING SYMPOSIUM. PCS 97, BERLIN, GERMANY, 10-12 SEPT. 1997, Nr. 143, 1997, ISSN 0341-0196, ITG-FACHBERICHTE, 1997, VDE-VERLAG, GERMANY, Seiten 695-700, XP002058658 * Absatz 4; Abbildung 4 * | 1,8 | G06T9/00 |
| A | OIEN G E: "Parameter quantization in fractal image coding" PROC. OF 1ST INTERNAT. CONF. ON IMAGE PROCESSING, AUSTIN, USA, 13-16 NOV. 1994, Bd. 3, - 1994 ISBN 0-8186-6952-7, IEEE COMPUT. SOC. PRESS, USA, Seiten 142-146, XP000611353 * Absatz 3 * | 1,8 | |
| A | YAO ZHAO ET AL: "A HYBRID IMAGE COMPRESSION SCHEME COMBINING BLOCK-BASED FRACTAL CODING AND DCT" SIGNAL PROCESSING. IMAGE COMMUNICATION, Bd. 8, Nr. 2, 1.März 1996, Seiten 73-78, XP000553093 * Absatz 2 * | 1,8 | **RECHERCHIERTE SACHGEBIETE (Int.Cl.6)**<br><br>G06T<br>H04N |
| A | GÖTTING ET AL: "Fractal image coding and magnification using invariant features" FRACTAL IMAGE ENCODING AND ANALYSIS, TRONDHEIM, NORWAY, 8-17 JULY 1995, Bd. 5, suppl.issue, ISSN 0218-348X, FRACTALS, APRIL 1997, WORLD SCIENTIFIC PUBLISHING, SINGAPORE, Seiten 65-74, XP002056451 * Absatz 1 * | 1,8 | |

Der vorliegende Recherchenbericht wurde für alle Patentansprüche erstellt

| Recherchenort | Abschlußdatum der Recherche | Prüfer |
|---|---|---|
| BERLIN | 12.März 1998 | Jonsson, P.O. |

EPO FORM 1503 03 82 (P04C03)